# EUROPEAN PATENT SPECIFICATION

(11) **EP 1 781 716 B1**
(45) Date of publication and mention of the grant of the patent: **23.02.2011**
(21) Application number: 05747589.9
(22) Date of filing: 01.06.2005
(51) Int. Cl.: C08F 4/64, C08F 10/02

(54) **PROCESS FOR THE PREPARATION OF A POLYMER**
VERFAHREN ZUR HERSTELLUNG EINES POLYMERS
PROCÉDÉ POUR PRÉPARER UN POLYMÈRE

(30) Priority: 22.06.2004 EP 04076823; 04.08.2004 EP 04077237
(43) Date of publication of application: 09.05.2007
(73) Proprietor: DSM IP Assets B.V., 6411 TE Heerlen (NL)
(72) Inventor: KRANENBURG, Mirko, NL-6215 JC Maastricht (NL); VAN DOREMAELE, Gerardus, Henricus, Josephus, NL-6132 HN Sittard (NL); WANG, Bing, NL-6162 EP Geleen (NL); ZUIDEVELD, Martin, Alexander, NL-6229 GD Maastricht (NL); FRIEDERICHS, Nicolaas, Hendrika, NL-6443 EE Brunssum (NL); LAWRENCE, Sally, Claire, Co. Donegal (IE); DUBBERLEY, Stuart, Roger, WS11 3FF Norton Canes Cannock (GB); MOUNTFORD, Philip, Headington, OX3 9JW Oxford (GB)
(74) Representative: Mooij, Johannes Jacobus
(86) International application number: PCT/EP2005/005906
(87) International publication number: WO 2005/123790

(56) References cited:
- PATENT ABSTRACTS OF JAPAN vol. 1999, no. 13, 30 November 1999 (1999-11-30) -& JP 11 228614 A (UBE IND LTD), 24 August 1999 (1999-08-24)
- PATENT ABSTRACTS OF JAPAN vol. 2003, no. 12, 5 December 2003 (2003-12-05) -& JP 2004 051868 A (SUMITOMO CHEM CO LTD), 19 February 2004 (2004-02-19)
- SCHEUER ET AL: "Synthesis, Structure and Olefin Polymerization Activity of Vanadium (V) Catalysts stabilized by Imido and Hydrotris(pyrazol)borato ligands" ORGANOMETALLICS, WASHINGTON, DC, US, vol. 14, no. 6, June 1995 (1995-06), pages 2627-2629, XP002092810 ISSN: 0276-7333
- DOS SANTOS J.H.Z. ET AL.: "Tris(pyrazolyl)borate imido vanadium(V) compound immobilized on inorganic supports and its use in ethylene polymerization" JOURNAL OF MOLECULAR CATALYSIS A CHEMICAL, vol. 212, 2 April 2004 (2004-04-02), pages 267-275, XP002307734
- MOUNTFORD P. ET AL.: "A structurally characterised, naked sp3-hybridised carbanion in the zwiterrionic imido complex [Ti(NBut){C(Me2pz)3}Cl(THF)] (HMe2pz = 3,5-dimethylpyrazole)" CHEM. COMMUN., 2001, pages 705-706, XP002307735 cited in the application

## Description

The invention relates to a process for the preparation of a polymer comprising at least one aliphatic or aromatic hydrocarbyl C₂ - C₂₀ mono or multiolefin(s) in the presence of a catalyst, an activator and optionally a scavenger.

A process for the preparation of a polymer comprising at least one aliphatic or aromatic hydrocarbyl C₂₋₂₀ olefins in the presence of a catalyst, an activator, and optionally a scavenger is known from US 6,114,481. US 6114481 discloses a process for the copolymerization of ethylene and at least one additional alpha olefin having from 3 to 8 carbon atoms, wherein said process employs a catalyst system for olefin polymerization comprising a metal-organic complex of a group 4 metal and an activator. Activators for single-site catalysts are fairly well known in the art. These activators comprise often a group 13 atom, such as boron or aluminum. Examples of these activators are described in Chem. Rev., 2000, 100, 1391 by E. Y-X. Chen and T.J. Marks. A preferred activator is a borane, a borate like [B(C₆F₅)₄]⁻ or an alkylaluminoxane (e.g. methylaluminoxane (MAO)).

In order to avoid the use of a co-catalyst, the synthesis of a compound containing a group 4 metal and a borate functionality in one molecule was described e.g. by Bochmann et al. (Organometallics, 2001, 2093). He describes the synthesis of compounds containing a catalyst comprising a group 4 metal in which the borate anion is part of the ligand structure, which is often referred to as zwitterionic, since the cation and the anion are in one molecule. These compounds show moderate activity for polymerization of ethylene and α-olefins.

Disadvantage of the catalyst of Bochmann is its elaborate synthesis. The elaborate synthesis makes the catalyst, which is active for the polymerization of olefins, expensive. A further disadvantage is the high fluor content of these compounds, which requires the use of potentially explosive and expensive reagents for the synthesis of such compounds and leads to a high molecular weight catalytic system, which again increases catalyst costs.

JP 11 22 86 14 describes a catalyst for the polymerization of an olefin which is composed of (A) a transition metal compound of the formula RB(Pr)₃M(Q)XLₙ (e.g. t-butylimidochlorotitanium(pyridine)hydrotrispyrazolylborate) and (B) a cocatalyst selected from the group consisting of organoaluminumoxy compound, Lewis acid compounds (e.g. triphenyl borane) and ionic compounds. The A1/transition metal atom ratio is preferably 5 to 1000.

The present invention aims to provide an effective catalyst system without fluor and boron containing activators, or activators, which have to be used in excess with respect to the catalyst.

This is achieved in that the catalyst and the activator are combined in a catalyst system according to Formula I, 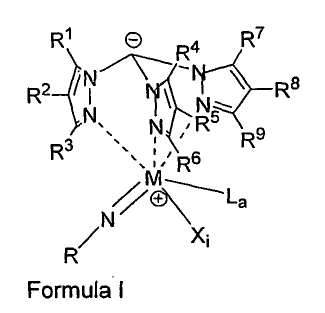 wherein.
R, R¹, R², R³, R⁴, R⁵, R⁶, R⁷, R⁸ and R⁹ can independently be chosen from substituted or unsubstituted alkyl or aryl groups having 1 to 20 carbon atoms,
M is a group 4, or 5 metal with valency v, preferably Ti
Lₐ is a coordinating ligand being a Lewis base with a = 0,1 or 2 being the number of ligands L and
Xᵢ is an anionic ligand with i = v-3 being the number of anionic ligands.
Substitutes on R, R¹ through R⁹ can be methyl, benzyl, methyltrimethylsilyl, phenyl, methoxyphenyl, dimethoxyphenyl, N,N-dimethylaminophenyl, bis (N,N-dimethylamino)phenyl, fluorophenyl, difluorophenyl, trifluorophenyl, tetrafluoropheny, perfluorophenyl, trialkylsilylphenyl, bis(trialkylsilyl)phenyl, and tris(trialkylsilyl)phenyl.

By combining catalyst and the activator in one compound according to formula I, a catalyst system is obtained, avoiding the expensive and elaborate to synthesize zwitter ions described by Bochmann et al. The catalyst system used in the process of the invention comprises a zwitterionic catalyst. An advantage of the process of the invention is that it can even be carried out without any activator present, as the activator forms part of the compound according to formula I. This catalyst system does not comprise boron and fluor atoms, nor requires excess of activator. The catalyst in formula I is prepared from the reaction of the halogenated group 4 metal compound containing a tris(pyrazolyl)methane ligand with an alkyl or aryl lithium reagent.

Processes for the preparation of a polymer comprising at least one aliphatic or aromatic hydrocarbyl C₂₋₂₀ olefins are well known in the art. These processes are generally conducted by contacting at least one olefinic monomer with a catalyst and optionally a scavenger in the gas phase or in the presence of an inert hydrocarbon solvent or diluent. Suitable solvents are a C₅₋₁₂ hydrocarbon which may be substituted by a C₁₋₄ alkyl group, such as pentane, hexane, heptane, octane, isomers and mixtures thereof, cyclohexane, methylcyclohexane, pentamethyl heptane and hydrogenated naphta. The process of the invention may be conducted at temperatures from 20° C to 250° C, depending on the product being made.

An olefinic monomer is understood to be a molecule containing at least one polymerizable double bond.

Suitable olefin monomers may be C₂₋₂₀ olefins. Preferred monomers include ethylene and C₃₋₁₂ alpha olefins which are unsubstituted or substituted by up to two C₁₋₆ alkyl radicals, C₈₋₁₂ vinyl aromatic monomers which are unsubstituted or substituted by up to two substituents selected from the group consisting of C₁₋₄ alkyl radicals, C₄₋₁₂ straight chained or cyclic hydrocarbyl radicals which are unsubstituted or substituted by a C₁₋₄ alkyl radical, illustrative examples of such alpha-olefins are one or more of the α-olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. These α-olefins may be used in combination.

The monomer may also be a polyene comprising at least two double bonds. The double bonds may be conjugated or non-conjugated in chains, ring-systems or combinations thereof, endo- and or exocyclic and may have different amounts and type of substituents. As result of that, a polyene may comprise of at least one aliphatic-, alicyclic- or aromatic group, or combinations thereof.

Generally, polyenes include aliphatic polyenes and alicyclic polyenes. More specifically, there can be mentioned aliphatic polyenes such as: 1,4-hexadiene, 3-methyl-1,4-hexadiene, 4-methyl-1,4-hexadiene, 5-methyl-1,4-hexadiene, 4-ethyl-1,4-hexadiene, 1,5-hexadiene, 3-methyl-1,5-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 1,6-octadiene, 6-methyl-1,6-octadiene, 7-methyl-1,6-octadiene, 6-ethyl-1,6-octadiene, 6-propyl-1,6-octadiene, 6-butyl-1,6-octadiene, 1,7-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 1,8-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 1,9-decadiene, 1 1,5,9-decatriene, 6-methyl-1,6-undecadiene, 9-methyl-1,8-undecadiene and 1,13-tetradecadiene, 1,3-butadiene, isoprene.

Alicyclic polyenes may consist of at least one cyclic fragment. Particular examples of these alicyclic polyenes include: vinylcyclohexene, vinyhorbornene, ethylidene norbornene, dicyclopentadiene, cycloctadiene, 2,5-norbornadiene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcycloocatane, 1,5-diallylcyclooctane, 1-allyl-4-isopropenylcyclohexane, 1-isopropenyl-4-vinylcyclohexane and 1-isopropenyl-3-vinylcyclopentane, 1,4-cyclohexadiene. Preferred polyenes are polyenes having both at least one endocyclic and optionally at least one exocyclic double bond, like 5-methylene-2-norbornene and 5-ethylidene-2-norbornerne, 5-vinylnorbornene, and bicyclo-(2,2,1)-hepta-2,5-diene), dicyclopentadiene, and vinylcyclohexene.

Examples of aromatic polyenes include divinylbenzene (including its isomers), trivinylbenzene (including its isomers) and vinylisopropenylbenzene (including its isomers).

All above mentioned monomers may be further substituted with at least one group comprising a heteroatom of group 13-17 or combinations thereof.

Homo-, co- and ter-polymers of the above mentioned olefinic monomers and blends thereof could be prepared with the process of the present invention.

If the metal-organic compound according to formula I comprises a halogen as anionic ligand Xᵢ it has to be replaced by a hydrocarbyl group before becoming an active catalyst. The process for the preparation of the metal-organic compound is therefore optionally carried out in the presence of a hydrocarbylating agent. In this application, hydrocarbylating agents are understood to be nucleophilic groups comprising a metal-, or a metalloid-carbon or hydride bond. The number of equivalents required for a process for the preparation of a hydrocarbylated metal-organic compound is at least the number of the anionic ligands Xᵢ that has to be replaced by a hydrocarbylating agent. Suitable hydrocarbylating agents are: tri-, or tetrahydrocarbyl boron, tri-, or tetrahydrocarbyl aluminium, tri-, or tetrahydrocarbyl gallium, tri-, or tetrahydrocarbyl indium and di-, or tetrahydrocarbyl tin, or the reaction products of these hydrocarbylating agents with sterically hindered alcohols, thiols, amines or phosphanes.

Preferably the hydrocarbylating agent comprises a metal or a metalloid chosen from group 1, 2, 11, 12, 13 or 14. Examples of hydrides from metals or metalloids of group 1, 2,11, 12, 13, 14 include: lithium hydride, sodium hydride, potassium hydride, calcium hydride, magnesium hydride, copper hydride, zinc hydride, cadmium hydride, borane, aluminium hydride, gallium hydride, silicon hydride, germanium hydride, and tin hydride.

More preferably the hydrocarbylating agent comprises Li, Mg, Zn, or Al.

Examples of Li comprising hydrocarbylating agents are methyllithium phenyllithium, benzyllithium, biphenyllithium, naphtyllithium, lithio-dimethylresorcinol, and lithio-N,N-dimethylaniline.

Examples of magnesium comprising hydrocarbylating agents are methylmagnesiumhalide, phenylmagnesiumhalide, benzylmagnesiumhalide, biphenylmagnesiumhalide, naphtylmagnesiumhalide, tolylmagnesiumhalide, xylylmagnesiumhalide, mesitylmagnesiumhalide, dimethylresorcinolmagnesiumhalide, N,N-dimethylanilinemagnesiumhalide, dimethylmagnesium, diphenylmagnesium, dibenzylmagnesium, (biphenylene)magnesium, dinaphtylmagnesium, ditolylmagnesium, dixylylmagnesium, dimesitylmagnesium, bis(dimethylresorcinol)magnesium, and bis(N,N-dimethylaniline)magnesium.

Examples of aluminium comprising hydrocarbylating agents are compound containing one or more Al-O, Al-N or Al-P bonds, diisobutylaluminium hydride, C₁-C₂₀ trihydrocarbyl aluminium, and hydrocarbylaluminoxanes. A highly preferred compound is triisobutylaluminum.

The process for the preparation of a polymer according to the invention is preferably carried out in a solvent. Suitable solvents or diluents include, straight and branched-chain hydrocarbons such as C₆-C₁₂ alkanes (e.g. hexane, heptane, pentamethyl hexane (PMH)); C₆- C₁₂ cyclic and alicyclic hydrocarbons such as cyclohexane, cycloheptane, methylcyclohexane; C₆ - C₁₂ aromatic and alkyl-substituted aromatic compounds such as benzene, toluene and xylene, and mixtures of the previous solvents or diluents.

The complexes may be employed as homogeneous catalysts or supported on the surface of a suitable support such as alumina or silica.

The polymerization can be conducted at a pressure ranging from 0.1 MPa to 10 MPa, preferably from 0.1 to 1 MPa.

In the catalyst system used in the process of the invention, Lₐ is ligand, being a coordinating Lewis base. Examples are olefins, ethers, thioethers, phosphines, and amines such as diethyl ether, diglyme, triglyme, tetrahydrofuran, tetrahydrothiophene and triethyl amine.

In the catalyst system.used in the process of the invention, is Xᵢ an anionic ligand. Each anionic ligand, Xᵢ, bonded to M, may be independently selected from the group consisting of monoanionic spectator ligands, hydride, halide, alkyl, silyl, germyl, aryl, amide, aryloxy, alkoxy, phosphide, sulfide, acyl, pseudo halides such as cyanide, azide, acetylacetonate, or a combination thereof. Preferably, Xᵢ is hydride or a moiety selected from the group consisting of monoanionic spectator ligands, halide, alkyl, aryl, silyl, germyl, aryloxy, alkoxy, amide, siloxy and combinations thereof (e.g. alkaryl, aralkyl, silyl substituted alkyl, silyl substituted aryl, aryloxyalkyl, aryloxyaryl, alkoxyalkyl, alkoxyaryl, amidoalkyl, amidoaryl, siloxyalkyl, siloxyaryl, amidosiloxyalkyl, haloalkyl, haloaryl) having up to 20 non-hydrogen atoms.

Preferred anionic ligands Xᵢ include halogenides and hydrocarbylanions. A preferred halogenide is chloride. In the embodiment of the invention hydrocarbyl groups are anionic charged hydrocarbyl groups. In addition to the usual definition of an hydrocarbyl group, in this application an hydrocarbyl group also comprises an hydride group. Hydrocarbyl groups optionally contain heteroatoms of group 13-17. Preferred hydrocarbyl groups include hydride, alkyl-, aryl-, aralkyl-, alkaryl-, substituted vinyl-, substituted allylgroups. More preferred hydrocarbyl groups include hydride, alkyl-, aryl-, aralkyl-, alkarylgroups. Most preferred hydrocarbyl groups include alkyl-, aryl-, aralkyl-, alkarylgroups. Examples of such mostly preferred hydrocarbyl groups include methyl, benzyl, methyltrimethylsilyl, phenyl, methoxyphenyl, dimethoxyphenyl, N,N-dimethylaminophenyl, bis (N,N-dimethylamino)phenyl, fluorophenyl, difluorophenyl, trifluorophenyl, tetrafluoropheny, perfluorophenyl, trialkylsilylphenyl, bis(trialkylsilyl)phenyl, and tris(trialkylsilyl)phenyl.

The amount of ligands (X and L) depends on the valency of the metal and the stability of the metal-organic compound. The metal-organic compound may be monomeric, oligomeric or a cluster. The number of anionic ligands equals the valency of the metal used minus three. The number of neutral ligands on the metal-organic reagent may range from 0 to the amount that satisfies the 18-electron rule, as known in the art.
The invention will be further illustrated by the following examples.

### Example 1

Under a nitrogen atmosphere methylaluminoxane or triisobutylaluminium (820 µmol) in toluene was added under stirring to pentamethylhexane (PMH, 1000 mL) at 95 °C in a 2 L stainless steel reactor. The reactor was then pressurized with 0.7 MPa of ethylene white a continuous ethylene flow of 500 L min⁻¹ was maintained. Excess ethylene was vented to the atmosphere. After 10 minutes a suspension containing (tris(pyrazolylmethide))Ti(Cl)(THF)(N-*t*Bu) (THF = tetrahydrofuran, N-*t*Bu = tertiary-butyl imido) (0.5 µmol) and PMH (50 mL) was added. During the addition of the titanium compound the polymerization reaction started as was observed by the exotherm. 10 Minutes after the addition of the suspension, the reaction was stopped by rapidly removing the reaction mixture from the bottom of the reactor. 5 ml methanol, was added to the mixture, followed by 50 ml water (with stirring). The mixture was acidified to pH 1 using a solution of 10 % HCl in MeOH. The polymers were filtered, washed with water (1000 ml) and dried to constant weight in vacuo at 100 degrees centigrade. The yield was 0.6 g of polyethylene.

### Example 2

To a sealable metal reactor (containing a glass insert) was added MAO (20 ml, 10 % in toluene w/w: 30 mmol) dissolved in toluene (200 ml). The solution was stirred at 250 rpm for 5 min. The catalyst (20 µmol) was dissolved in toluene (50 ml) and added to the reactor. The solution of (tris(pyrazolylmethide)Ti(Cl)(THF)(N-*t*Bu)Cl(THF){C(Me₂pz)₃}] and MAO was stirred for 30 min at 250 rpm. The reaction vessel was placed under full vacuum for 10 s, the stirring was increased to 750 rpm and the temperature was taken. The reactor was placed under a pressure of 0.5 MPa of ethylene and temperature readings were taken every 5 min.

After 60 min, the reactor was isolated and the pressure was released. 5 ml methanol was added to the mixture, followed by 50 ml water (with stirring). The mixture was acidified to pH 1 using a solution of 10 % HCl in MeOH. The polymers were filtered, washed with water (1000 ml) and dried to constant weight at room temperature. The yield was 2.9 g of polyethylene.

## Claims

1. A process for the preparation of a polymer comprising at least one aliphatic or aromatic hydrocarbyl C₂ - C₂₀ mono or multiolefin(s) in the presence of a catalyst, an activator, **characterized in that** the catalyst and the activator are combined in a catalyst system according to formula I, 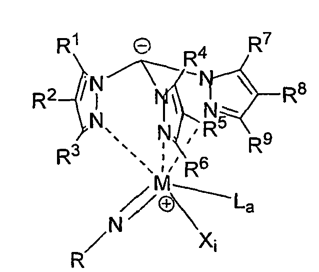 wherein :
R, R¹, R², R³, R⁴, R⁵, R⁶, R⁷, R⁸ and R⁹ can independently be chosen from substituted or unsubstituted alkyl or aryl groups having 1 to 20 carbon atoms,
M is a group 4, or 5 metal, with valency v,
Lₐ is a coordinating ligand being a Lewis base with a = 0,1 or 2 being the number of ligands L and
Xᵢ is an anionic ligand, with i = v-3, being the number of anionic ligands, the catalyst does not comprise boron and fluor atoms.

## Patentansprüche

1. Verfahren zur Herstellung eines Polymers, das mindestens ein aliphatisches oder aromatisches C₂-C₂₀-Hydrocarbylmonoolefin oder -multiolefin umfaßt, in Gegenwart eines Katalysators und eines Aktivators, **dadurch gekennzeichnet, daß** man den Katalysator und den Aktivator in einem Katalysatorsystem gemäß Formel I 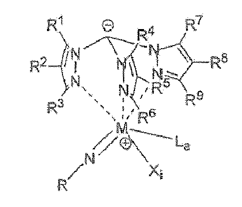 worin:
R, R¹, R², R³, R⁴, R⁵, R⁶, R⁷, R⁸ und R⁹ unabhängig voneinander unter substituierten oder unsubstituierten Alkyl- oder Arylgruppen mit 1 bis 20 Kohlenstoffatomen ausgewählt sein können,
M für ein Metall der Gruppe 4 oder 5 mit der Wertigkeit v steht,
Lₐ für einen koordinierenden Liganden steht, bei dem es sich um eine Lewis-Base handelt, wobei a = 0, 1 oder 2 die Zahl der Liganden L ist, und
Xᵢ für einen anionischen Liganden steht, wobei i = v-3 die Zahl der anionischen Liganden ist, kombiniert, wobei der Katalysator keine Bor- und Fluoratome enthält.

## Revendications

1. Procédé de préparation d'un polymère comprenant au moins une hydrocarbyl-mono- ou -multi-oléfine en C₂-C₂₀ aliphatiques ou aromatiques en présence d'un catalyseur, d'un activateur, **caractérisé en ce que** le catalyseur et l'activateur sont combinés dans un système de catalyseur selon la formule I, 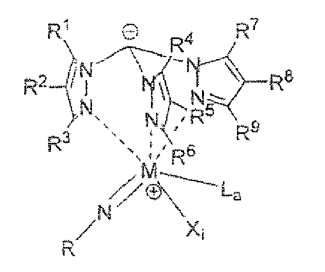 dans laquelle .
R, R¹, R², R³, R⁴, R⁵, R⁶, R⁷, R⁸ et R⁹ peuvent être choisis indépendamment parmi des groupements alkyle ou aryle substitués ou non substitués ayant de 1 à 20 atomes de carbone,
M est un métal du groupe 4 ou 5 ayant une valence v,
Lₐ est un ligand de coordination qui est une base de Lewis, a = 0, 1 ou 2 étant le nombre de ligands L, et
Xᵢ est un ligand anionique, i = v-3, étant le nombre de ligands anioniques, le catalyseur ne comprend ni d'atome de bore ni d'atome de fluor.
